# EUROPEAN PATENT SPECIFICATION

(11) **EP 2 791 943 B1**
(45) Date of publication and mention of the grant of the patent: **01.02.2017**
(21) Application number: 12867111.2
(22) Date of filing: 15.11.2012
(51) Int. Cl.: G21C 9/00, F28D 15/04, G21C 15/18, G21C 15/257, G21C 15/26, G21C 13/02, G21D 1/00, G21D 3/04

(54) **EMERGENCY CORE COOLING SYSTEM (ECCS) FOR NUCLEAR REACTOR EMPLOYING CLOSED HEAT TRANSFER PATHWAYS**
NOTFALLKERNKÜHLSYSTEM FÜR KERNREAKTOR MIT GESCHLOSSENEN WÄRMEÜBERTRAGUNGSPFADEN
SYSTÈME DE REFROIDISSEMENT D'URGENCE DU COEUR (ECCS) POUR RÉACTEUR NUCLÉAIRE EMPLOYANT DES CIRCUITS FERMÉS DE TRANSFERT DE CHALEUR

(30) Priority: 14.12.2011 US 201113325603
(43) Date of publication of application: 22.10.2014
(73) Proprietor: Babcock & Wilcox Nuclear Energy, Inc., Lynchburg, VA 24504 (US)
(72) Inventor: BINGHAM, Billy, E, Lynchburg, VA 24502-4669 (US)
(74) Representative: D Young & Co LLP
(86) International application number: PCT/US2012/065187
(87) International publication number: WO 2013/115883

(56) References cited:
- WO-A1-2011/097597
- JP-A- 2001 228 280
- US-A- 5 158 742
- US-A- 5 282 230
- US-A- 5 295 168
- US-A1- 2011 051 876
- US-B2- 6 909 765

## Description

### BACKGROUND

The following relates to the nuclear reactor arts, nuclear power generation arts, nuclear safety arts, and related arts.

Nuclear reactor safety centers upon maintaining the radioactive core in an immersed condition with adequate heat removal. During normal operation, the reactor core is disposed in a sealed reactor pressure vessel that is filled (or mostly filled) with primary coolant (e.g., light water, in the case of a light water reactor). Heat removal is provided by circulation of the primary coolant through a "heat sink". In the case of a nuclear power plant, the "heat sink" usually takes the form of a steam generator or turbine. In a conventional boiling water reactor (BWR) the primary coolant is converted to steam inside the pressure vessel and piped out to directly drive a turbine where the act of performing useful work on the turbine cools the steam. In a conventional pressurized water reactor (PWR) primary coolant in a subcooled liquid phase is piped into an external steam generator where heat is transferred to a secondary coolant that in turn drives the turbine. In an integral PWR design an "integral" steam generator is located inside the pressure vessel. In this variant design secondary coolant feedwater is piped into the steam generator and secondary coolant steam is piped out of the steam generator.

Safety systems are designed to remediate various possible events that could compromise the objective of keeping the reactor core immersed in primary coolant and adequately cooled. Two possible events that are addressed by the safety systems are: a loss of coolant accident (LOCA); and a loss of heat sinking accident. Conventionally, safety systems include: (1) a steel containment structure surrounding the pressure vessel and of sufficient structural strength to contain released primary coolant steam; (2) an ultimate heat sink (UHS) comprising a pool of water located outside of the containment; and (3) an emergency core cooling system (ECCS) comprising a combination of condensers to condense steam into water and reject the heat to the UHS. Additionally, a refueling water storage tank (RWST) located inside the containment structure to provide water during refueling operations can also serve as a source of water in emergencies. The steam recaptured by the condensers is optionally fed back into the RWST or the reactor coolant inventory and purification system (RCIPS). The UHS is designed to contain a sufficient supply of water to dissipate heat from the reactor for a designated time period (e.g. 72 hours or for two weeks in some regulatory schemes) without replenishment of the water in the UHS.

In a LOCA, a rupture in the pressure vessel or in connecting piping (e.g., pipes conducting primary coolant to/from an external turbine or steam generator) may cause the pressure vessel to depressurize and possibly leak primary coolant. Remediation of a LOCA includes (1) containing and condensing primary coolant steam in order to depressurize the system; and (2) replenishing water to the pressure vessel in order to keep the reactor core immersed. The RWST provides replenishment water, while the ECCS condensers condense the steam to control pressure within containment.

In a loss of heat sinking event the "heat sink" is lost either through loss of primary coolant flow to the turbine (in a BWR) or to the external steam generator (in a PWR), or through loss of feedwater to the steam generator (in either a PWR or an integral PWR). Response to loss of heat sinking includes venting steam from the pressure vessel to the ECCS condensers in order to remove heat and controllably depressurize the pressure vessel. Ideally this will be performed using a closed system in which steam from the pressure vessel is vented into the condensers. However, if the pressure rise due to loss of heat sinking is too rapid it may be necessary to vent into the containment structure (in effect, converting the loss of heat sinking event into a controlled LOCA).

The high pressure (i.e., steam) loop of the ECCS condensers are connected with the pressure vessel in a loss of heat sinking accident, and/or are connected inside the containment structure in a LOCA or a heat sinking accident in which the pressure vessel is vented to containment. The low pressure (i.e., coolant fluid) loop of the ECCS condensers are connected with the UHS via suitable piping, which must pass through the containment structure in order to provide fluid communication between the ECCS condensers inside containment and the UHS which is outside of containment. This piping presents a potential safety hazard since a break in the pipe may result in a primary leak from containment. In a LOCA this can result in venting of radioactive primary coolant steam into the outside atmosphere.
US 5,158,742 relates to a reactor steam isolation cooling system.
US 5,282,230 relates to a passive containment cooling system.
JP 2001228280 relates to a reactor

### BRIEF SUMMARY

In one aspect of the disclosure, a containment structure contains an interior volume, and a nuclear reactor is disposed in the interior volume. An ultimate heat sink pool is disposed outside of the containment structure. A condenser includes a plurality of closed-path heat pipes or closed-path thermosiphons having first ends and opposite second ends. The closed-path heat pipes or closed-path thermosiphons are embedded in the containment structure with the first ends protruding into the interior volume and the second ends protruding outside of the containment structure.
The ultimate heat sink is spaced apart from the containment structure and the condenser also includes a plenum chamber surrounding the second ends at the closed-path heat pipes or closed-path thermosiphons. Piping connects the ultimate heat sink pool and the plenum chamber surrounding the second ends at the closed-path heat pipes or closed-path thermosiphons.

### BRIEF DESCRIPTION OF THE DRAWINGS

The invention may take form in various components and arrangements of components, and in various process operations and arrangements of process operations. The drawings are only for purposes of illustrating preferred embodiments and are not to be construed as limiting the invention, which is defined in the appended claim.
FIGURE 1 diagrammatically shows a side sectional view of a nuclear reactor facility including an exemplary condenser which is not part of the present invention.
FIGURES 2 and 3 diagrammatically show side sectional and top views, respectively, of another exemplary condenser which is not part of the present invention.
FIGURE 4 diagrammatically shows a side sectional view of an exemplary condenser which is not part of the present invention.
FIGURE 5 diagrammatically shows a side sectional view of a nuclear reactor facility including an embodiment of a condenser according to the present invention.

### DETAILED DESCRIPTION OF THE PREFERRED EMBODIMENTS

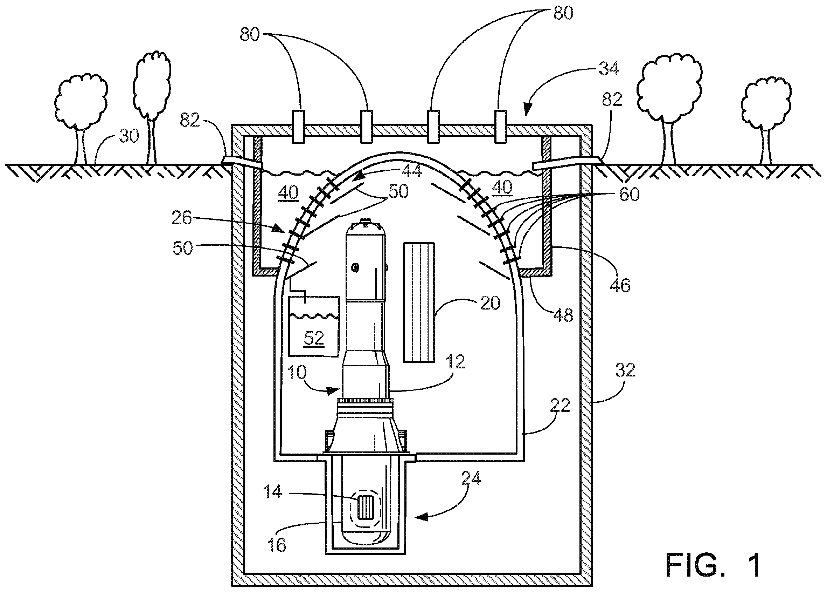

With reference to FIGURE 1, an illustrative nuclear reactor of the pressurized water reactor (PWR) type **10** includes a pressure vessel **12**, which in the illustrative example is a cylindrical vertically mounted vessel. (Note that the term "cylindrical" as used herein does not require a mathematically precise cylinder, but rather allows for deviations such as changes in diameter along the length of the cylinder axis, inclusion of vessel penetrations or other localized features, or so forth). A nuclear reactor core **14** is disposed in a lower portion of the pressure vessel **12**. (Note that in diagrammatic FIGURE 1 the reactor core **14** is revealed by a cutaway **16** in the pressure vessel **12**). The reactor core **14** includes a mass of fissile material, such as a material containing uranium oxide (UO₂) that is enriched in the fissile ²³⁵U isotope, in a suitable matrix material. In a typical configuration, the fissile material is arranged as "fuel rods" arranged in a core basket. The pressure vessel **12** contains primary coolant water (typically light water, that is, H₂O, although heavy water, that is, D₂O, is also contemplated) in a subcooled state.

The PWR **10** includes other components known in the art that are not shown, such as a "basket" or other structure supporting the reactor core **14** in the pressure vessel **12**, neutron-absorbing control rods selectively inserted into the reactor core **14** by a control rod drive mechanism (CRDM) to control the nuclear chain reaction, a central riser that defines a primary coolant pressure boundary, primary coolant pumps, or so forth. These various components may be variously disposed inside or outside the pressure vessel. For example, the CRDM may be external, as is conventionally the case, or may be located internally inside the pressure vessel as described in Stambaugh et al., "Control Rod Drive Mechanism for Nuclear Reactor", U.S. Pub. No. 2010/0316177 A1 published Dec. 16, 2010; and Stambaugh et al., "Control Rod Drive Mechanism for Nuclear Reactor", Int'l Pub. WO 2010/144563 A1 published Dec. 16, 2010. The reactor coolant pumps may be internal or external, and in some embodiments may be omitted entirely in which case heat generated by the reactor core **14** drives primary coolant flow via natural circulation.

The illustrative PWR **10** is an integral PWR design, by which it is meant that an internal steam generator is disposed in the pressure vessel **12**. The installed steam generator is not shown due to the opacity of the pressure vessel **12**; however, FIGURE 1 diagrammatically shows a removed internal steam generator **20** that has been removed from the pressure vessel **12** for maintenance, or is located as shown prior to installation into the pressure vessel **12**, or so forth. Additional conventional components are not shown, such as a crane for lifting an upper pressure vessel section in order to open the pressure vessel **12** and for moving the steam generator **20**; various scaffolding, walkways or the like for movement of personnel, various auxiliary equipment and electronics, and so forth.

The PWR **10** is contained in a containment structure **22**. The containment structure **22** is typically a steel structure in order to provide structural strength. The use of a steel structure also provides high thermal conductivity to facilitate removal of heat from inside the containment structure **22**. Instead of steel, other materials are also contemplated for the containment structure **22**. For example, portions or all of the containment structure **22** may be made of steel-reinforced concrete, a composite material such as a steel host with embedded nanoparticles to enhance thermal conductivity, or so forth.

The illustrative containment structure **22** is generally cylindrical, and further includes a lower flood well **24** and an upper dome **26**. The lower flood well **24** contains the lower portion of the pressure vessel **12** including the reactor core **14**. The flood well **24** enables the lower portion of the pressure vessel **12** to be flooded with water in certain emergency situations in order to assist in cooling the reactor core **14**. The upper dome **26** provides enhanced structural strength and serves as a steam condensation surface in certain emergency situations. The containment structure **22** is large enough to accommodate the PWR **10** and to additionally provide space for operations such as removing the steam generator **20** during installation and/or maintenance.

The illustrative containment structure **22** is subterranean, by which it is meant that at least a portion of the containment structure **22** lies below grade, that is, at least partially below the ground level **30**. A secondary containment structure **32** contains the (primary) containment structure **22**. The secondary containment structure **32** is typically made of concrete, steel-reinforced concrete, or another suitably robust building material. The illustrative secondary containment structure **32** is also subterranean in order to "contain" the subterranean primary containment structure **22**. An upper "roof' **34** of the secondary containment structure **32** is above-ground. In somme examples the upper roof **34** includes vents **80** arranged to allow water evaporated or boiled off of the UHS pool **40** to escape from the secondary containment structure **32**. Refilling inlets **82** may also be utilized to refill and/or maintain ultimate heat sink water level.

In the illustrative system of FIGURE 1, an ultimate heat sink (UHS) pool **40** is located at-grade (that is, at ground level) and is in thermal communication with the upper dome **26** of the containment structure **22**. Indeed, in the illustrative arrangement the upper dome **26** forms a wall or roof that serves as at least a portion of the "bottom" and/or "side" of the UHS pool **40**. An inside surface **44** of the dome **26** serves as a condensation surface that is cooled by the UHS pool **40**. The UHS pool **40** is contained by the upper dome **26** defining at least a portion of the "bottom" and/or "side" of the pool **40** along with sidewalls **46** and, in the illustrative example, an additional bottom portion **48** that is welded with (or otherwise in sealed connection with) the upper dome **26**. In some examples the additional bottom portion **48** may be omitted and the sidewalls **46** are instead welded directly with (or otherwise in direct sealed connection with) the upper dome **26**.

The upper portion (i.e., roof **34**) of the secondary containment structure **32** is optionally omitted. Including the roof **34** enables better control over the composition (e.g., chemistry) of the UHS pool **40**, and prevents debris from falling into the UHS pool **40**. In some examples the UHS pool is provided with a cover that is separate from the secondary containment structure. On the other hand, in some examples the sidewalls **46** and optional bottom portion **48** of the UHS pool may form part of the secondary containment structure. More generally, various levels and degrees of integration and/or separation between the walls and bottom of the UHS pool **40**, on the one hand, and the walls and roof of the secondary containment **32** on the other hand, are contemplated. It is also contemplated to omit the secondary containment structure **32** entirely, if such an omission does not compromise safety and does not violate applicable nuclear regulatory standards.

The UHS pool **40** provides passive heat removal as follows. Primary coolant released from the pressure vessel **12** (whether in an uncontrolled LOCA or in a controlled fashion such as may be performed in a loss of heat sinking event) naturally rises and contacts the inside surface **44** of the dome **26**. The UHS pool **40** in contact with the dome **26** (or, more generally, with a wall and/or roof of the containment structure **22**) keeps the dome **26** at outside ambient temperature (or, more precisely, at about the temperature of the water in the UHS pool **40**, which is at or close to outside ambient temperature). The primary coolant steam thus condenses onto the inside surface **44** of the dome **26** to form condensate, and its latent heat and any additional kinetic energy is transferred through the dome **26** to the UHS pool **40**.

The condensate is in the form of water (or water droplets) adhering to the inside surface **44** of the dome **26**. This water falls or runs downward along the surface under the influence of gravity. Advantageously, this may result in a substantial portion of the condensed water flowing into the flood well **24** to contribute to flooding the flood well **24**. Alternatively, baffles **50** may be provided to guide the flow of the condensed water. In the illustrative example the baffles **50** are arranged to guide the condensed water into a refueling water storage tank (RWST) **52** which is used in some emergency conditions (such as some LOCA events) to replenish water in the pressure vessel **12**.

Arrangements such as that shown in FIGURE 1, in which the UHS pool **40** is in contact with the containment structure **22** with sides and/or a roof of the containment structure **22** forming a portion of the bottom and/or sides of the UHS pool **40**, are disclosed in further detail in "Pressurized Water Reactor With Compact Passive Safety Systems", U.S. Pub. No. 2013/0051511 A1 published Feb. 28, 2013.

With continuing reference to FIGURE 1, a plurality of closed-path heat pipes or closed-path thermosiphons **60** are embedded in the containment structure **22**, and more particularly in the roof or wall (e.g., dome **26**) that forms a portion of a bottom or side of the UHS pool **40**. The closed-path heat pipes or closed-path thermosiphons **60** have first ends and opposite second ends, and are embedded with their first ends contained inside the containment structure **22** and their second ends disposed outside of the containment structure **22** and immersed in the UHS pool **40**.

Closed-path thermosiphons are closed tubes containing a working fluid such as liquid water. When one end of the thermosiphon is heated relative to the opposite end, this creates natural convection of the working fluid in the thermosiphon which transfers heat via convection from the hotter end to the cooler end. The convection currents within the thermosiphon are defined in part by the gravitational acceleration, and accordingly thermosiphons generally operate most efficiently when oriented vertically (as defined respective to the gravitational field) with the hotter end facing down and the cooler end facing up. In normal operation, the working fluid inside the thermosiphon is generally single-phase (e.g., liquid water). However, phase change (e.g., boiling of liquid water inside the thermosiphon) may occur when the temperature of the working fluid at the hot end of the thermosiphon exceeds its boiling point. This is sometimes referred to as the "reboiling" operational mode of the thermosiphon. In this case the higher buoyancy of the gas phase versus the liquid phase helps drive the convection that provides the heat transfer.

A heat pipe is also a closed tube containing a working fluid. However, the heat pipe does not transfer heat by convection, but rather by performing an evaporation/condensation cycle with evaporation of the working fluid occurring at the hotter end and condensation of the working fluid occurring at the opposite lower end. Mass transfer of the condensate back to the hotter end can be driven by gravity, in which case the heat pipe exhibits a high degree of orientational dependence with most efficient operation occurring in the vertical orientation with the hotter end facing down and the cooler end facing up. Optionally, a wicking structure can be disposed inside the heat pipe in order to provide mass transfer of condensate to the hotter end by capillary action. The wicking structure substantially reduces the dependency of heat transfer on heat pipe orientation, and indeed a heat pipe with a suitable wicking structure can be operated efficiently even in a horizontal position.

The term "closed-path" (i.e., "closed path heat pipes or closed-path thermosiphons") clarifies that the heat pipe or thermosiphon operates as a closed system, with the tube being sealed and having no inlet and no outlet. In other words, the working fluid is permanently trapped inside the closed-path thermosiphon or heat pipe.

With continuing reference to FIGURE 1, during a LOCA the hot primary coolant escapes as hot steam from the pressure vessel into the interior volume of the containment structure **22**. This hot steam contacts the first ends of the closed-path heat pipes or closed-path thermosiphons **60** such that the first ends are the hotter ends and the second ends, which are immersed in the UHS pool **40**, are the cooler ends. Accordingly, heat is transferred from the steam to the UHS pool **40**, either by convection (in the case of closed path thermosiphons **60**) or by an evaporation/condensation cycle (in the case of closed path heat pipes **60**).

The closed-path heat pipes or closed-path thermosiphons **60** are closed heat transfer pathways **60**, in contrast with conventional condenser arrangements in which water from the UHS pool is piped through the wall (or roof) of the containment structure into its interior and back out. A single break in the closed heat transfer pathways disclosed herein cannot breach containment. Rather, to breach containment a minimum of two breaks in a single thermosiphon or heat pipe **60** is needed - a break of the first end protruding into the containment structure **22**, and also a break of the second end protruding out of the containment structure **22**. This is a consequence of the thermosiphon or heat pipe **60** being a closed path, i.e. sealed at both ends. In contrast, a pipe conducting water to or from the UHS pool can breach containment with a single pipe break.

The approach shown in FIGURE 1 enables the entire dome **26**, or at least the portion of the dome **26** in contact with the UHS pool **40** in cooperation with the closed heat transfer pathways **60**, to serve as a condenser. However, that condenser only operates on the interior volume of the containment structure **22** as a whole. In some applications, it may be desired to pipe steam to the condenser and condensate away from the condenser. For example, in the case of a loss of heat sinking accident that does not include a loss of coolant, it would be preferable to pipe the steam from the pressure vessel into a condenser in order to control the pressure rise, rather than letting it escape into (and contaminate) the interior volume of the containment structure **22**.

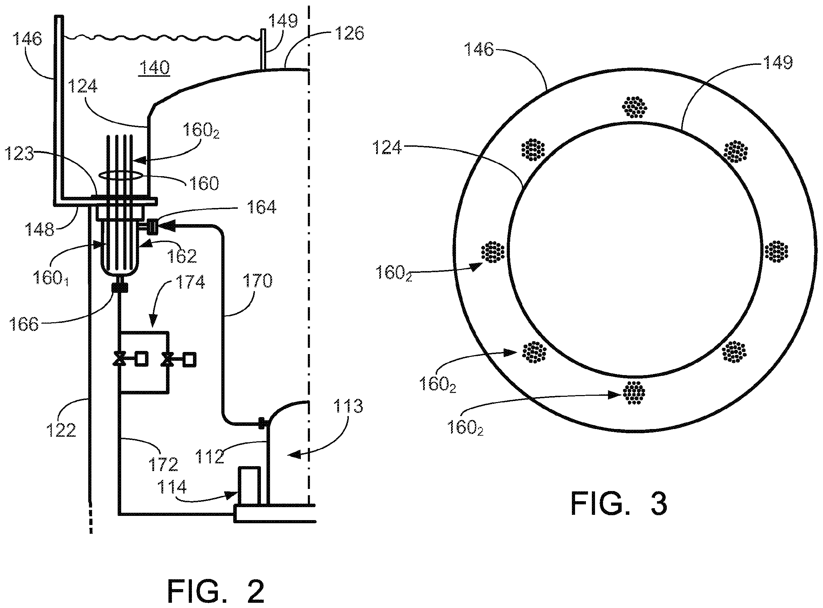

Toward this end, with reference to FIGURES 2 and 3 another example includes a nuclear reactor comprising a pressure vessel **112**, of which only an upper portion is visible in the partial view of FIGURE 2. The visible portion of the pressure vessel **112** delineates an upper plenum that defines an internal pressurizer **113**. Also shown in FIGURE 2 is a reactor coolant pump **114** mounted near the top of the pressure vessel proximate to the internal pressurizer **113**. Integral PWRs with such an arrangement including an internal pressurizer and a proximate reactor coolant pump are disclosed in further detail in "Pressurized Water Reactor With Upper Vessel Section Providing Both Pressure and Flow Control", U.S. Pub. No. 2012/0294405 A1 published Nov. 22, 2012. The reactor of FIGURE 2 is disposed in a containment structure **122** that is similar to the containment structure **22** of FIGURE 1 except that it includes a horizontal annular shelf **123** creating an inner sidewall **124**. The containment **122** includes a dome **126** extending to the inner sidewall **124**. A secondary containment structure similar to the secondary containment **32** of the example of FIGURE 1 may be provided, but is not shown in FIGURE 2. An ultimate heat sink (UHS) pool **140** is similar to the UHS pool **40** of FIGURE 1, and has an annular sidewall **146** and bottom portion **148**. The bottom portion **148** and the annular shelf **123** of the containment structure **122** together define an annular floor of the annular UHS pool **140**. The inner boundary of the UHS pool **140** is defined by a second annular sidewall **149** that has no analog in the example of FIGURE 1. (Its function is effectively defined by the point where the water level of the UHS pool **40** meets the dome **26**).

In the examples of FIGURES 2 and 3, eight distinct condensers are defined, only one of which is seen in side sectional view in FIGURE 2. While eight condensers are shown, more or less than eight condensers may be utilized. Each condenser includes closed-path heat pipes or closed-path thermosiphons **160** oriented vertically and embedded in the annular shelf **123** of the containment structure **122**. The closed-path heat pipes or closed-path thermosiphons **160** include first ends **160**₁ protruding downward into the interior volume contained by the containment structure **122**, and opposite second ends **160**₂ protruding upward outside of the containment **122**. The second ends **160**₂ are immersed in the UHS pool **140**. Additionally, a plenum chamber **162** is disposed inside the containment **122** and surrounds the first ends **160₁**. The plenum chamber **162** includes an inlet **164** for admitting steam and an outlet **166** for discharging condensate. The outlet **166** should be at or near the lowest point of the plenum chamber **162** so that the condensate drains into the outlet **166**.

The condensers of FIGURES 2 and 3 advantageously can be connected to various ports to provide controlled condenser action. In illustrative FIGURE 2, the inlet **164** is connected by piping **170** to the internal pressurizer **113** and the outlet **166** is connected by piping **172** to a pump suction plenum of the reactor coolant pump **114**. When a valve assembly **174** is opened this configuration is suitable for remediating a loss of heat sinking accident. The loss of heat sinking causes steam pressure buildup inside the pressure vessel **112**, and particularly in the internal pressurizer **113**. When the valve assembly **174** is opened this steam flows through piping **170** to the inlet **164** where the closed-path heat pipes or closed-path thermosiphons **160** transfer the heat efficiently into the UHS pool **140**. This heat transfer condenses the steam and the condensate drains through outlet **166** and piping **172** to the pump suction plenum of the reactor coolant pump **114**. (Another advantage of this configuration is that suction action of the pump **114** can assist in drawing the condensate out of the plenum chamber **162**.) It will be appreciated that various piping arrangements can be used; for example, a "T" connection and suitable valves can be added to enable the inlet **164** to be connected to the interior volume of the containment structure **122** for condensing steam released into that volume during a LOCA.

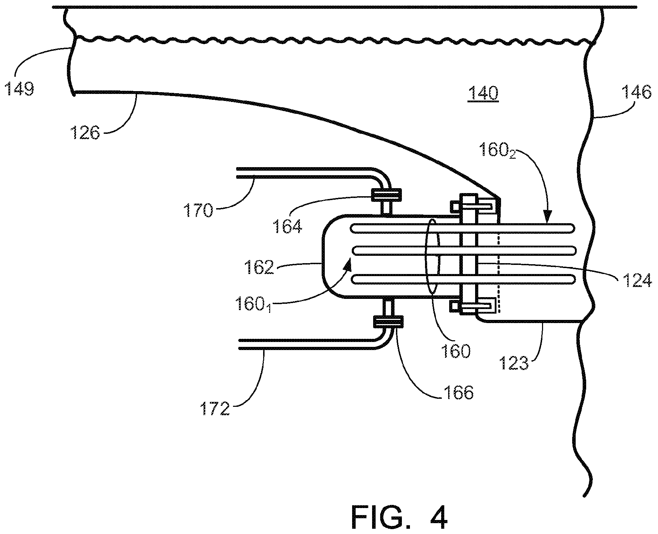

With reference to FIGURE 4, an alternative example is shown in which the condenser is mounted on the inner sidewall **124** rather than on the annular shelf **123** of the containment structure **122**. In this orientation the closed-path heat pipes **160** are oriented horizontally. Given the strong orientation dependence of thermosiphons and wickless heat pipes, in the example of FIGURE 4 the closed-path heat pipes **160** are preferably closed-path heat pipes **160** that include wicks.

The embedding of the heat pipes into a wall or roof of the containment structure can be done in various ways. If the containment is made of steel-reinforced concrete, it may be possible to embed the heat pipes during formation of the concrete. If the containment structure is steel, then one suitable approach is to employ a tubesheet, which can form a portion of the containment wall or roof, and the closed-path heat pipes or closed-path thermosiphons are suitably embedded in the openings of the tubesheet. If the chamber plenum is used to define a controlled volume around the first ends (e.g. plenum chamber **162** surrounding first ends **160₁**), then the tubesheet can also define part of the plenum chamber. The working fluid for either thermosiphons or heat pipes is suitably water, although other working fluids or fluid mixtures are also contemplated. In general, the working fluid can be tailored to cover the temperature and pressure range expected to be reached in any credible accident scenario. It is also worth noting that the isolation provided by the closed heat transfer pathways disclosed herein is well-suited to accommodating a hydrogen burn inside containment.

The examples of FIGURES 1-4 employ the UHS pool **40**, **140** that is in contact with the containment structure **22**, **122**. In more conventional designs, the UHS pool is spaced apart from the containment structure, and conventionally piping passes through the containment wall or roof to connect the UHS pool with condensers located inside containment. This is readily accommodated in the disclosed approaches by adding a plenum chamber surrounding the second ends protruding away from the containment structure, and flowing the UHS pool water into that plenum.

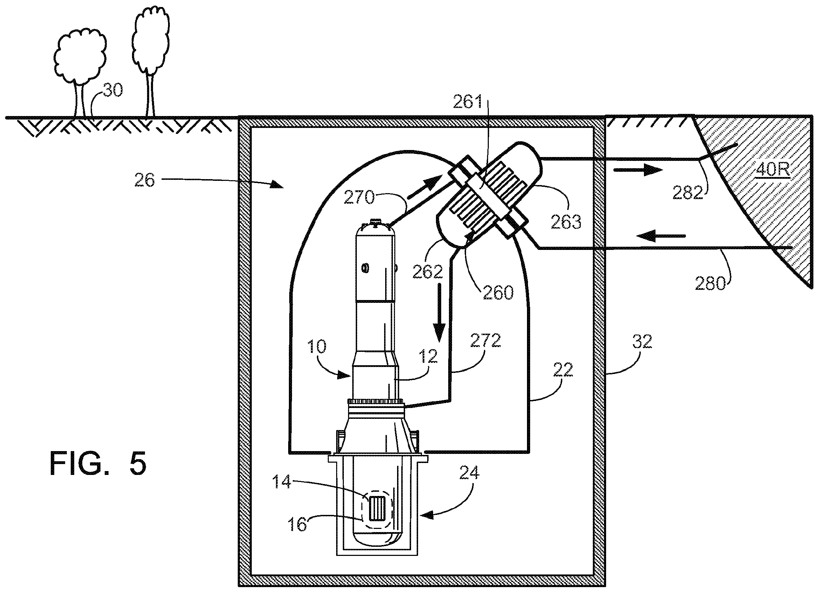

With reference to FIGURE 5, such an embodiment is illustrated. The embodiment is substantially similar to the example of FIGURE 1, except that the UHS pool **40** of FIGURE 1 is replaced by a UHS pool **40R** that is spaced apart from the containment structure **22**. Closed-path heat pipes or closed-path thermosiphons **260** are embedded in a tubesheet **261** that forms a small portion of the containment dome **26**. A first plenum chamber **262** is disposed inside the containment **22** and surrounds the first ends, while a second plenum chamber **263** is disposed outside the containment **22** and surrounds the second ends. Piping **270** conveys steam from the internal pressurizer of the pressure vessel **12** to an inlet of the plenum chamber **262**, while piping **272** drains condensate from the plenum chamber **262** back to the pressure vessel **12**. These operate similarly to the piping **170**, **172** of FIGURE 2, except that the piping **272** returns the condensate to around a mid-flange location of the pressure vessel **12**.

On the cold side, piping **280** conveys water from the UHS pool **40R** into an inlet of the plenum **263** where it receives heat from the second ends of the closed-path heat pipes or closed-path thermosiphons **260**. Heated water or steam flows back to the UHS pool **40R** via piping **282** to complete the loop.

The preferred embodiments have been illustrated and described. Obviously, modifications and alterations will occur to others upon reading and understanding the preceding detailed description. It is intended that the invention be construed as including all such modifications and alterations insofar as they come within the scope of the appended claims.

## Claims

1. An apparatus comprising:
a containment structure (22) containing an interior volume;
a nuclear reactor (10) disposed in the interior volume;
an ultimate heat sink pool (40R) disposed outside of the containment structure (22); and
a condenser including a plurality of closed-path heat pipes or closed-path thermosiphons (260) having first ends and opposite second ends;
wherein the closed-path heat pipes or closed-path thermosiphons are embedded in the containment structure (22) with the first ends protruding into the interior volume and the second ends protruding outside of the containment structure (22),
**characterized in that**
the ultimate heat sink pool (40R) is spaced apart from the containment structure (22) and the condenser further comprises:
a plenum chamber (263) surrounding the second ends of the closed-path heat pipes or closed-path thermosiphons (260);
wherein piping (280,282) connects the ultimate heat sink pool (40R) and the plenum chamber (263) surrounding the second ends of the closed-path heat pipes or closed-path thermosiphons (260).

2. The apparatus of claim 1, wherein the second ends are immersed in the ultimate heat sink pool disposed outside of the containment structure.

3. The apparatus of claim 1, wherein the condenser further comprises:
a plenum chamber disposed in the interior volume and surrounding the first ends of the closed-path heat pipes or closed-path thermosiphons.

4. The apparatus of claim 1, wherein the condenser further comprises:
a plenum chamber disposed in the interior volume and surrounding the first ends of the closed-path heat pipes or closed-path thermosiphons, the plenum chamber having an inlet for admitting steam and an outlet for discharging condensate.

5. The apparatus of claim 4, wherein the inlet of the plenum chamber surrounding the first ends of the closed-path heat pipes or closed-path thermosiphons is connected with a pressurizer of a nuclear reactor disposed in the interior volume of the containment structure.

6. The apparatus of any preceding claim wherein:
the nuclear reactor includes a pressure vessel and a nuclear reactor core contained in the pressure vessel; and
the second ends are in thermal communication with the ultimate heat sink pool.

7. The apparatus of any preceding claim, wherein the of closed-path heat pipes or closed-path thermosiphons comprise: one or more selected from the group comprising: vertically oriented closed-path closed-path thermosiphons; and closed-path heat pipes.

8. The apparatus of claim 6 as dependent from at least claim 4, further comprising:
piping providing one or more selected from the group comprising: a fluid connection between a pressurizer of the nuclear reactor and the inlet of the plenum chamber of the condenser; and a fluid connection between the outlet of the plenum chamber of the condenser and the pressure vessel of the nuclear reactor;
the piping including a valve for opening or closing the fluid connection.

9. The apparatus of claim 8, wherein the piping provides a fluid connection between a pressurizer of the nuclear reactor and the inlet of the plenum chamber of the condenser and wherein the nuclear reactor is a pressurized water reactor (PWR) and the pressurizer of the nuclear reactor comprises an internal pressurizer defined by an upper plenum of pressure vessel.

10. The apparatus of claim 6, wherein the condenser further comprises:
a tubesheet forming a portion of the containment structure wherein the closed-path heat pipes or closed-path thermosiphons are embedded in the openings of the tubesheet with the first ends contained inside the containment structure and the second ends disposed outside of the containment structure.

## Patentansprüche

1. Vorrichtung, die aufweist:
eine Sicherheitsbehälterkonstruktion (22), die ein Innenvolumen enthält;
einen Kernreaktor (10), der in dem Innenvolumen angeordnet ist;
ein Endwärmesenkebecken (40R), das außerhalb der Sicherheitsbehälterkonstruktion (22) angeordnet ist; und
einen Kondensator, der mehrere Geschlossenpfad-Wärmerohre oder Geschlossenpfad-Thermosiphone (260) aufweist, die erste Enden und entgegengesetzte zweite Enden aufweisen;
wobei die Geschlossenpfad-Wärmerohre oder Geschlossenpfad-Thermosiphone in die Sicherheitsbehälterkonstruktion (22) eingebettet sind,
wobei die ersten Enden in das Innenvolumen hineinragen und die zweiten Enden von der Sicherheitsbehälterkonstruktion (22) nach außen vorragen,
**dadurch gekennzeichnet, dass**
das Endwärmesenkebecken (40R) von der Sicherheitsbehälterkonstruktion (22) beabstandet ist und der Kondensator ferner aufweist:
eine Plenumkammer (263), welche die zweiten Enden der Geschlossenpfad-Wärmerohre oder Geschlossenpfad-Thermosiphone (260) umgibt;
wobei Rohrleitungen (280, 282) das Endwärmesenkebecken (40R) und die Plenumkammer (263), welche die zweiten Enden der Geschlossenpfad-Wärmerohre oder Geschlossenpfad-Thermosiphone (260) umgibt, verbinden.

2. Vorrichtung nach Anspruch 1, wobei die zweiten Enden in das Endwärmesenkebecken getaucht sind, das außerhalb der Sicherheitsbehälterkonstruktion angeordnet ist.

3. Vorrichtung nach Anspruch 1, wobei der Kondensator ferner aufweist:
eine Plenumkammer, die in dem Innenvolumen angeordnet ist und die ersten Enden der Geschlossenpfad-Wärmerohre oder Geschlossenpfad-Thermosiphone umgibt.

4. Vorrichtung nach Anspruch 1, wobei der Kondensator ferner aufweist:
eine Plenumkammer, die in dem Innenvolumen angeordnet ist und die ersten Enden der Geschlossenpfad-Wärmerohre oder Geschlossenpfad-Thermosiphone umgibt, wobei die Plenumkammer einen Einlass zum Einlassen von Dampf und einen Auslass zum Abgeben von Kondensat aufweist.

5. Vorrichtung nach Anspruch 4, wobei der Einlass der Plenumkammer, welche die ersten Enden der Geschlossenpfad-Wärmerohre oder Geschlossenpfad-Thermosiphone umgibt, mit einem Druckhalter eines Kernreaktors verbunden ist, der in dem Innenvolumen der Sicherheitsbehälterkonstruktion angeordnet ist.

6. Vorrichtung nach einem beliebigen der vorhergehenden Ansprüche, wobei:
der Kernreaktor einen Druckbehälter und einen in dem Druckbehälter enthaltenen Reaktorkern aufweist; und
die zweiten Enden mit dem Endwärmesenkebecken in thermischer Kommunikation stehen.

7. Vorrichtung nach einem beliebigen der vorhergehenden Ansprüche, wobei die Geschlossenpfad-Wärmerohre oder Geschlossenpfad-Thermosiphone aufweisen: eines oder mehrere aus der Gruppe umfassend: senkrecht ausgerichtete Geschlossenpfad-Thermosiphone und Geschlossenpfad-Wärmerohre.

8. Vorrichtung nach Anspruch 6, soweit mindestens von Anspruch 4 abhängig, ferner aufweisend:
Rohrleitungen, die eine oder mehrere aus der Gruppe bereitstellen, die umfasst: eine Fluidverbindung zwischen einem Druckhalter des Kernreaktors und dem Einlass der Plenumkammer des Kondensators, und eine Fluidverbindung zwischen dem Auslass der Plenumkammer des Kondensators und dem Druckbehälter des Kernreaktors;
wobei die Rohrleitungen ein Ventil zum Öffnen oder Schließen der Fluidverbindung aufweisen.

9. Vorrichtung nach Anspruch 8, wobei die Rohrleitungen eine Fluidverbindung zwischen einem Druckhalter des Kernreaktors und dem Einlass der Plenumkammer des Kondensators bereitstellen und wobei der Kernreaktor ein Druckwasserreaktor (DWR) ist und der Druckhalter des Kernreaktors einen inneren Druckhalter umfasst, der durch ein oberes Plenum des Druckbehälters begrenzt ist.

10. Vorrichtung nach Anspruch 6, wobei der Kondensator ferner aufweist:
eine Rohrplatte, die einen Abschnitt der Sicherheitsbehälterkonstruktion bildet, wobei die Geschlossenpfad-Wärmerohre oder Geschlossenpfad-Thermosiphone in die Öffnungen der Rohrplatte eingebettet sind, wobei die ersten Enden innerhalb der Sicherheitsbehälterkonstruktion enthalten sind und die zweiten Enden außerhalb der Sicherheitsbehälterkonstruktion angeordnet sind.

## Revendications

1. Appareil comprenant :
une structure de confinement (22) contenant un volume intérieur ;
un réacteur nucléaire (10) disposé dans le volume intérieur ;
un bassin de refroidissement d'ultime secours (40R) disposé à l'extérieur de la structure de confinement (22) ; et
un condenseur contenant une pluralité de caloducs en boucle fermée ou de thermosiphons en boucle fermée (260) ayant des premières extrémités et des deuxièmes extrémités opposées ;
les caloducs en boucle fermée ou les thermosiphons en boucle fermée étant incorporés dans la structure de confinement (22) avec les premières extrémités faisant saillie dans le volume intérieur et les deuxièmes extrémités faisant saillie à l'extérieur de la structure de confinement (22),
**caractérisé en ce que**
le bassin de refroidissement d'ultime secours (40R) est espacé de la structure de confinement (22) et le condenseur comprend en outre :
une chambre de détente (263) entourant les deuxièmes extrémités des caloducs en boucle fermée ou des thermosiphons en boucle fermée (260) ;
une tuyauterie (280, 282) reliant le bassin de refroidissement d'ultime secours (40R) et la chambre de détente (263) entourant les deuxièmes extrémités des caloducs en boucle fermée ou des thermosiphons en boucle fermée (260).

2. Appareil selon la revendication 1, les deuxièmes extrémités étant immergées dans le bassin de refroidissement d'ultime secours disposé à l'extérieur de la structure de confinement.

3. Appareil selon la revendication 1, le condenseur comprenant en outre :
une chambre de détente disposée dans le volume intérieur et entourant les premières extrémités des caloducs en boucle fermée ou des thermosiphons en boucle fermée.

4. Appareil selon la revendication 1, le condenseur comprenant en outre :
une chambre de détente disposée dans le volume intérieur et entourant les premières extrémités des caloducs en boucle fermée ou des thermosiphons en boucle fermée, la chambre de détente possédant un orifice d'entrée pour l'admission de vapeur et un orifice de sortie pour la décharge de condensat.

5. Appareil selon la revendication 4, la chambre de détente qui entoure les premières extrémités des caloducs en boucle fermée ou des thermosiphons en boucle fermée étant reliée à un pressuriseur d'un réacteur nucléaire disposé dans le volume intérieur de la structure de confinement.

6. Appareil selon l'une quelconque des revendications précédentes,
le réacteur nucléaire incluant une cuve sous pression et un noyau de réacteur nucléaire contenu dans la cuve sous pression ; et
les deuxièmes extrémités se trouvant en communication thermique avec le bassin de refroidissement d'ultime secours.

7. Appareil selon l'une quelconque des revendications précédentes, les caloducs en boucle fermée ou les thermosiphons en boucle fermée comprenant : un ou plusieurs choisis dans le groupe comprenant : des thermosiphons en boucle fermée orientés verticalement ; et des caloducs en boucle fermée.

8. Appareil selon la revendication 6 telle qu'elle dépend au moins de la revendication 4, comprenant en outre :
une tuyauterie réalisant une ou plusieurs choisie(s) parmi le groupe comprenant une connexion fluidique entre un pressuriseur du réacteur nucléaire et l'orifice d'entrée de la chambre de détente du condenseur ; et une connexion fluidique entre l'orifice de sortie de la chambre de détente du condenseur et la cuve sous pression du réacteur nucléaire ;
la tuyauterie incluant une vanne pour ouvrir ou fermer la connexion fluidique.

9. Appareil selon la revendication 8, la tuyauterie réalisant une connexion fluidique entre un pressuriseur du réacteur nucléaire et l'orifice d'entrée de la chambre de détente du condenseur et le réacteur nucléaire étant un réacteur à eau sous pression (PWR) et le pressuriseur du réacteur nucléaire comprenant un pressuriseur interne défini par une chambre d'expansion supérieure de la cuve sous pression.

10. Appareil selon la revendication 6, le condenseur comprenant en outre :
une plaque tubulaire formant une portion de la structure de confinement, les caloducs en boucle fermée ou les thermosiphons en boucle fermée étant incorporés dans les ouvertures de la plaque tubulaire avec les premières extrémités contenues à l'intérieur de la structure de confinement et les deuxièmes extrémités disposées à l'extérieur de la structure de confinement.
